# EUROPÄISCHE PATENTSCHRIFT

(11) **EP 0 423 462 B1**
(45) Veröffentlichungstag und Bekanntmachung des Hinweises auf die Patenterteilung: **31.07.1996**
(21) Anmeldenummer: 90116053.1
(22) Anmeldetag: 22.08.1990
(51) Int. Cl.: G01L 19/04, B60C 23/20, B60C 23/04, H01H 35/28

(54) **Einrichtung zur Überwachung der Dichtigkeit eines Fahrzeugreifens**
Apparatus to monitor the airtightness of a vehicle tyre
Dispositif de surveillance de l'étanchéité d'un pneu

(30) Priorität: 14.10.1989 DE 3934415
(43) Veröffentlichungstag der Anmeldung: 24.04.1991
(73) Patentinhaber: WABCO GmbH, D-30453 Hannover (DE)
(72) Erfinder: Bartscher, Peter, D-3000 Hannover 91 (DE); Singbartl, Günther, D-3000 Hannover 1 (DE); Stegemann, Gerhard, D-3216 Salzhemmendorf 4 (DE); Ulrich, Helmut, D-3257 Springe 1 (DE)
(74) Vertreter: Schrödter, Manfred, Dipl.-Ing.

(56) Entgegenhaltungen:
- EP-A- 0 173 090
- EP-A- 0 320 387
- WO-A-87/03547
- DE-A- 3 242 291
- US-A- 4 206 437

## Beschreibung

Die Erfindung betrifft eine Einrichtung zur Überwachung der Dichtigkeit einer gasgefüllten Kammer gemäß dem Oberbegriff des Patentanspruchs 1.

Eine solche Einrichtung ist durch die EP-B-0 248 821 vorbekannt. Die vorbekannte Einrichtung dient zur Überwachung der Dichtigkeit eines Fahrzeugreifens und tastet in dieser Eigenschaft mit einer Druckmeßeinrichtung den Reifendruck ab. Die Meßgröße der Druckmeßeinrichtung ist mit Hilfe einer Schalteinrichtung auswertbar. Die Schalteinrichtung weist eine dem Reifensolldruck entsprechende Schaltschwelle auf, derart, daß bei unterschrittenem Reifensolldruck mit der Schalteinrichtung ein Signal erzeugbar ist.

Da der Reifen Temperaturschwankungen ausgesetzt ist, ändert sich damit auch der Reifendruck. Dies hat zur Folge, daß der vorgegebene Schaltschwellenwert mehr oder weniger von dem Reifensolldruck abweicht. Die Druckmeßeinrichtung ist daher mit einer temperaturempfindlichen Einrichtung versehen, die in Abhängigkeit von der Reifentemperatur betätigbar ist und dazu dient, die Schaltschwelle dem durch die Temperatur sich verändernden Reifensolldruck anzugleichen.

Als temperaturempfindliche Einrichtung dient hier eine allseits geschlossene Referenzdruckdose die mit einem Medium gefüllt ist, dessen Druck dem des Reifensolldruckes entsprechen soll. Die Referenzdruckdose ist von der Reifentemperatur umgeben und kann sich den Schwankungen der Reifentemperatur entsprechend ausdehnen oder zusammenziehen. Diese Formänderung wird genutzt, um die Vorspannung der federbelasteten Schalteinrichtung zu beeinflussen, derart, daß der Schaltschwellenwert der temperaturabhängigen Druckänderung des Reifensolldruckes angepaßt ist.

Diese Einrichtung ist jedoch nur funktionsfähig, solange an der Referenzdruckdose kein Leck auftritt. Bei einem solchen Leck würde ein Druckausgleich zwischen dem Reifen und der Referenzdruckdose stattfinden.

Bei einer undichten Referenzdruckdose wird hier durch den Druckausgleich zwischen dem Reifen und der Referenzdruckdose die druckempfindliche Schalteinrichtung betätigt und demzufolge ein Signal erzeugt. Dieses Signal ist jedoch nicht eindeutig identifizierbar, weil entweder ein zu niedriger Reifendruck oder eine Leckage der Referenzdruckdose damit angezeigt wird.

Eine Forderung etwa, daß die Referenzdruckdose über eine relativ lange Betriebszeit hinweg ohne die erwähnte Funktionsstörung einsatzbereit sein soll, kann nur ein aufwendiges Fertigungsverfahren voraussetzen. Bei dem gegebenen Zweifel an der Betriebssicherheit dürften darüber hinaus wiederholte Leckagekontrollen oder eine aufwendige Überwachung an der Referenzdruckdose unerläßlich sein.

Mit der DE 28 13 058 C2 ist eine Druckmeßeinrichtung bekannt, deren druckempfindliche Einrichtung aus einem federbelasteten Kolben gebildet ist, wobei der Kolben gegen die Kraft der Feder mit dem Reifendruck beaufschlagbar ist. Die Vorspannung der Feder ist auf den Reifensolldruck abgestimmt, so daß bei einem Druckabfall unter den Solldruck die Federkraft überwiegt und der Kolben in eine signalgebende Position bewegt wird. Da diese Einrichtung keine mit dem Reifendruck beaufschlagbaren Mittel aufweist, die allein der Erkennung und Verwertung der Reifengastemperatur dienen, kann das in der EP-B-0 248 821 beschriebene Leckageproblem hier nicht auftreten. Dafür muß jedoch der Nachteil in Kauf genommen werden, daß die durch die Federkraft einmal festgelegte Schaltschwelle nicht an den durch Temperatureinwirkung sich verändernden und damit verfälschten Reifensolldruck angleichbar ist.

Aus der EP 0 173 090 A1 ist ein Druckgeber für einen Druckschalter oder einen Regler bekannt, bei dem die Einflüsse der Umgebungstemperatur die Schalt- bzw. Abtastgenauigkeit nicht oder nur noch sehr geringfügig beeinflussen. Es sind Kompensationsmaßnahmen angegeben, die das Ziel haben, temperaturabhängig sich ändernde mechanische Eigenschaften von mechanischen Teilen zu eliminieren, die Teile des Druckgebers selbst darstellen. Bei Einführung dieser Maßnahmen wird die Meßgenauigkeit des Druckgebers selbst verbessert; die Maßnahmen sind als solche jedoch nicht für eine Einrichtung zur Überwachung der Dichtigkeit einer gasgefüllten Kammer geeignet.

Der Erfindung liegt daher die Aufgabe zugrunde, eine Druckmeßeinrichtung zur Überwachung der Dichtigkeit einer gasgefüllten Kammer zu schaffen, deren Schalteinrichtung einen in Abhängigkeit von der Gastemperatur veränderbaren Schaltschwellenwert aufweist, wobei die Mittel zur temperaturabhängigen Veränderung des Schaltschwellenwertes vom Gasdruck unabhängig wirksam sind.

Diese Aufgabe wird durch die im Patentanspruch 1 angegebene Erfindung gelöst.

Die erfindungsgemäße Einrichtung hat den Vorteil, daß diese insofern wartungsfrei arbeitet weil eine Funktionsüberwachung während der Betriebsdauer nicht erforderlich ist.

Die erfindungsgemäße Einrichtung hat weiterhin den Vorteil, daß sie im Vergleich mit der eingangs erwähnten Einrichtung weniger aufwendig herstellbar ist.

Die Erfindung wird anhand eines Ausführungsbeispiels, das in der Zeichnung dargestellt ist, näher erläutert.

Es zeigen:
- **Fig.1**: eine Einrichtung zur Überwachung der Dichtigkeit einer gasgefüllten Kammer mit einer temperaturempfindlichen Einrichtung
- **Fig.2,3 und 4**: eine Einrichtung gemäß Fig.1 mit Varianten der tempearaturempfindlichen Einrichtung.

Die Einrichtung ist dafür vorgesehen, temperaturabhängige Druckschwankungen eines zu überwachenden Gasdruckes zu kompensieren.

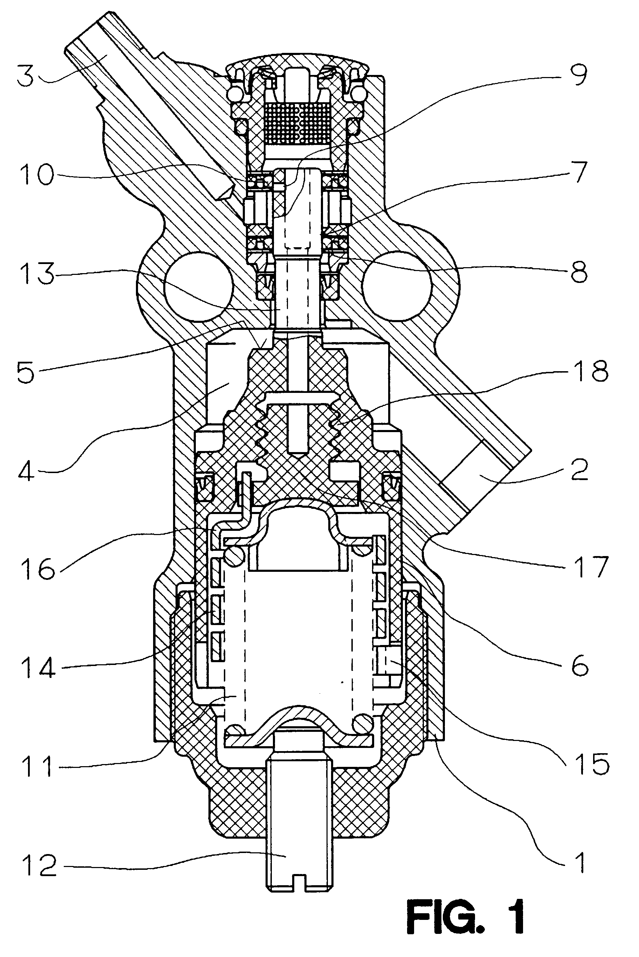

Die Fig.1 zeigt ein Gehäuse (1) mit einem Einlaß (2) und einem Auslaß (3) sowie eine Druckkammer (4) die durch das sie umgebende Gehäuse (1) und eine bewegliche Wand (5), die durch einen Kolben (6) gebildet ist, begrenzt ist. Die Druckkammer (4) ist über den Einlaß (2) mit dem Gas füllbar, dessen Druck zu überwachen ist. Der Einlaß (2) ist über ein Einlaßventil (7, 8), das in der Art eines Schieberventils ausgebildet ist, mit dem Auslaß (3) verbindbar. Das Einlaßventil (7, 8) kann aber auch in einer zweckentsprechenden Ausbildung als Sitzventil gestaltet sein. Der Auslaß (3) ist über ein Auslaßventil (9, 10) mit der Atmosphäre verbindbar. Das Einlaßventil (7, 8) und das Auslaßventil (9, 10) sind in Abhängigkeit von der Stellung des Kolbens (6) betätigbar.

Der Kolben (6) ist mit der Kraft einer Feder (11) beaufschlagt, die in Richtung auf die Druckkammer (4) wirkt. Es ist denkbar, daß der Kolben (6) aus einer entsprechend gestalteten und mit dem Gehäuse (1) verbundenen Membran ausgebildet sein kann. Die Kraft der Feder (11) ist mit einer Stellschraube (12) einstellbar, derart, daß bei einem vorgegebenen Solldruck in der Druckkammer (4) eine Schaltschwelle gegeben ist, bei der sich der Kolben (6) in der Stellung befindet, in der das Einlaßventil (7, 8) geschlossen ist. Bei Absinken des Druckes in der Druckkammer (4) unter den Solldruck überwiegt die Kraft der Feder (11), was zur Folge hat, daß ein mit dem Kolben (6) bewegbares Ventilglied (13) in Öffnungsrichtung des Einlaßventils (7, 8) bewegt wird.

Die den federbelasteten Kolben (6) und die Ventileinrichtung (7, 8; 9, 10) umfassende Schalteinrichtung steht mit einer temperaturempfindlichen Einrichtung (14) in Wirkverbindung. Die temperaturempfindliche Einrichtung (14) ist mit der den zu überwachenden Druck verändernden Temperatur betätigbar und dient dazu, die Schaltschwelle dem durch die Temperatur sich verändernden Druck anzugleichen. Die temperaturempfindliche Einrichtung (14) ist aus einem thermisch reagierenden Formteil (14) gebildet. Das Formteil (14) ist als Spirale ausgebildet, wobei durch eine temperaturabhängige Formänderung ein Verdrehen der beiden Spiralenden zueinander erzeugbar ist. Die Spiralform kann, wie Fig.1 zeigt, in Form einer Schraubenfeder ausgebildet sein.

Das spiralförmige Formteil (14) ist an einem Spiralende (15) gegenüber dem Kolben (6) drehgesichert. Das freie Spiralende (16) steht mit einem Lineartrieb (17, 18) in Wirkverbindung, mit dem die Verdrehung des freien Spiralendes (16) in eine Längsbewegung umwandelbar ist. Der Lineartrieb ist in der Art einer Mutter (17) - Schraube (18) - Verbindung ausgebildet. Durch die in Abhängigkeit von der Temperatur erzeugte Längsbewegung wird der zum Anzeigen des Druckabfalls im Reifen erforderliche Hub zum Öffnen des Ventils (7, 8) konstant gehalten. Das bedeutet, daß die Stellung des Ventilgliedes (13) bis zum Öffnen des Einlaßventils (7, 8) unverändert bleibt, derart, daß die durch den Solldruck gegebene Schaltschwelle der Schalteinrichtung dem durch Temperaturänderung sich einstellenden neuen Solldruck angeglichen wird.

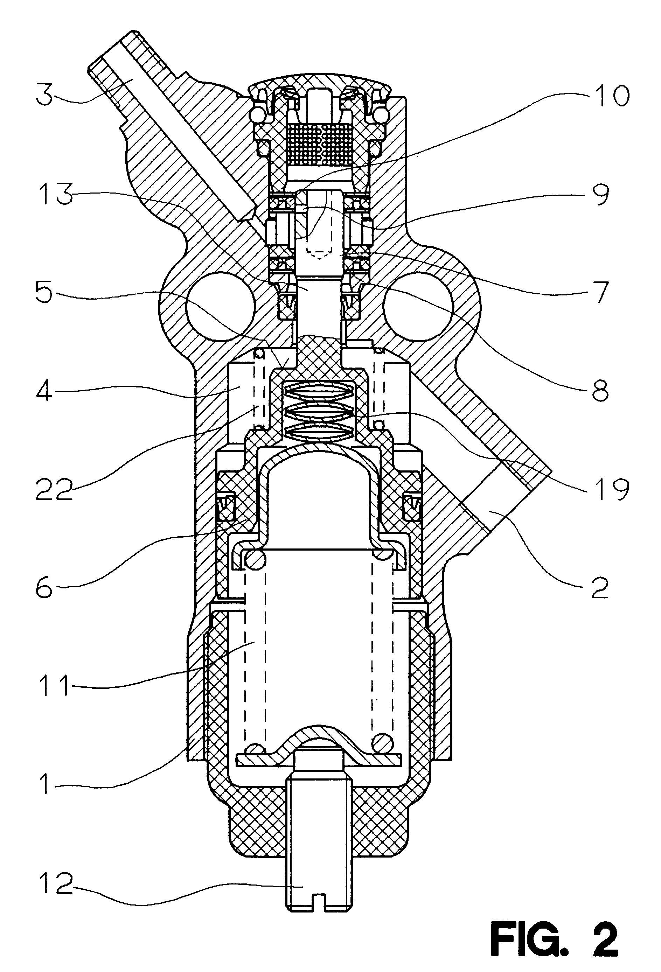

Die Fig.2, 3 und 4 zeigen die Einrichtung zur Drucküberwachung gemäß Fig.1, jedoch mit anders ausgebildeten thermisch reagierenden Elementen. Hierbei sind gleiche Einrichtungsgegenstände mit gleichen Bezugszeichen versehen.

Die Einrichtung gemäß Fig.2 ist mit einer temperaturempfindlichen Einrichtung versehen, die aus thermisch reagierenden Scheiben (19) gebildet sind, deren Formänderung durch ein sich Wölben der Längsausdehnung der temperaturempfindlichen Einrichtung dient.

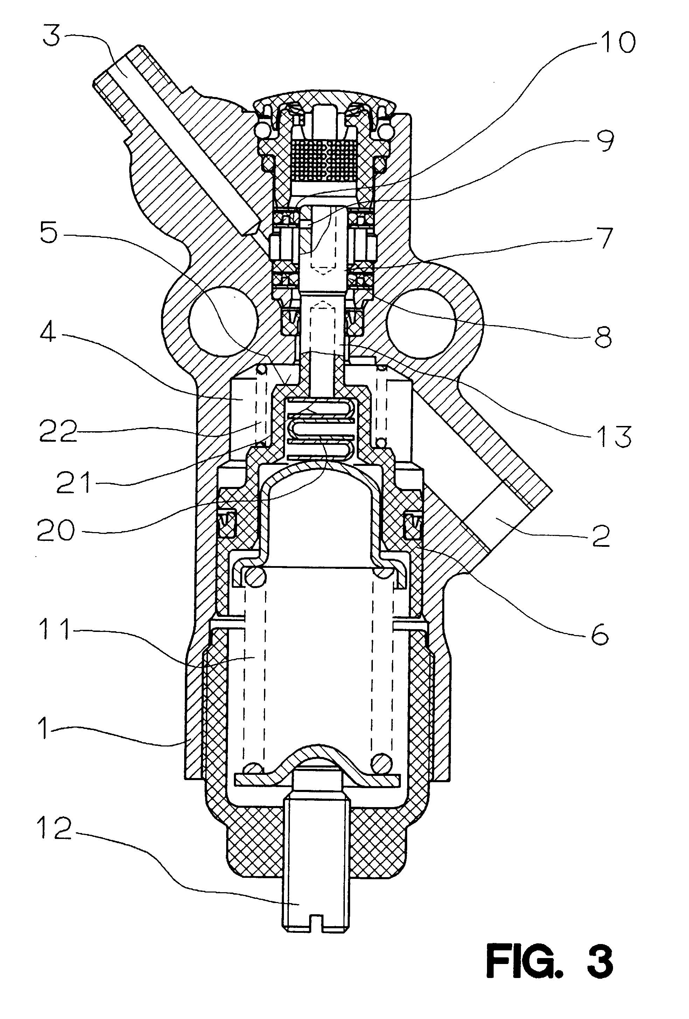

Gemäß Fig.3 ist die temperaturabhängige Einrichtung aus thermisch reagierenden U-förmigen Teilen (20) gebildet, deren Formänderung durch ein sich Öffnen und Schließen der Schenkel (21) erzeugbar ist.

Den Einsatzbedingungen bezüglich der aufzubringenden Kraft oder der zu erzeugenden Längenänderung entsprechend, können die Formteile (14, 19, 20) einzeln oder mehrfach Verwendung finden. Bei mehrfacher Verwendung können diese hintereinander- oder parallelwirkend zueinander angeordnet sein. Schließlich ist es auch denkbar, unterschiedliche Formteile miteinander zu kombinieren. Bei Einsatz der Formteile (19, 20) sorgt eine Rückholfeder (22) dafür, daß bei einer temperaturabhängigen Längenverkürzung der Kolben (6) nachgeführt wird.

Die Formteile (14, 19, 20) können aus thermisch reagierendem Verbundmetall gebildet sein.

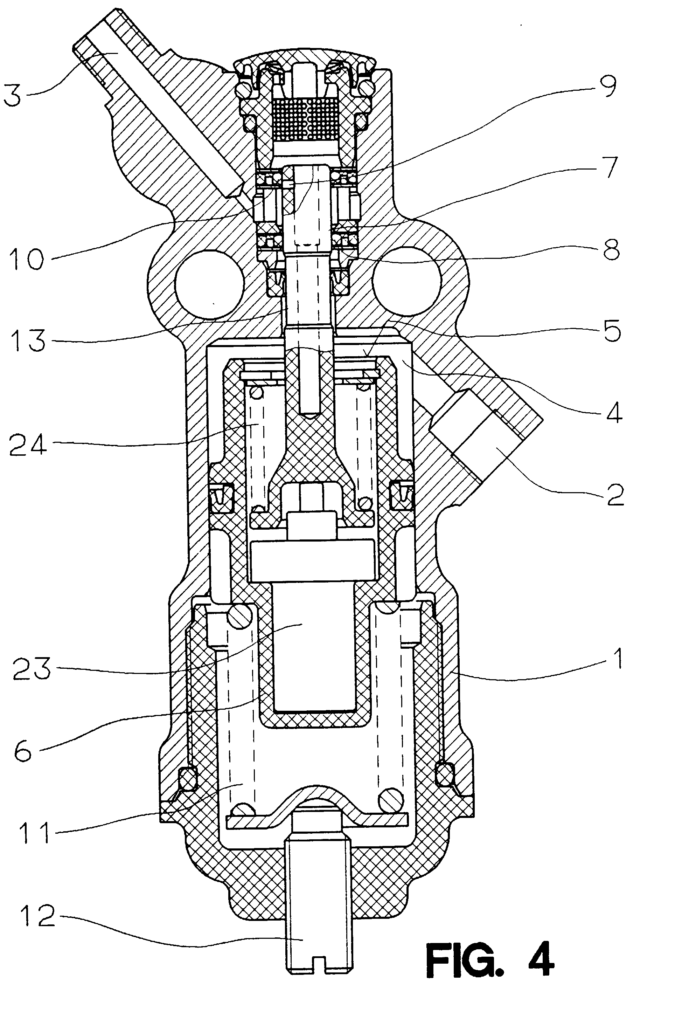

Die Einrichtung gemäß Fig.4 ist mit einer temperaturempfindlichen Einrichtung versehen, die aus einem sogenannten Dehnstoff-Arbeitselement (23) gebildet ist, wie es beispielsweise aus dem Prospekt BTH-361-6060-2000 MÜ der Fa. Behr-Thomson bekannt ist. Der in dem Dehnstoff-Arbeitselement (23) eingeschlossene Dehnstoff hat die Eigenschaft, in Abhängigkeit von der Temperatur sein Volumen zu verändern. Diese Eigenschaft wird genutzt, um eine Längenausdehnung des Dehnstoff-Arbeitselementes (23) in Abhängigkeit von der Temperatur zu erzeugen, die der Veränderung des Schaltschwellenwertes in der vorbeschriebenen Weise dient. Bei einer temperaturbedingten Längenverkürzung des Dehnstoff-Arbeitselementes (23) sorgt eine Rückholfeder (24) für die Rückführung des Ventilgliedes (13).

Das Dehnstoff-Arbeitselement (23) bietet die Möglichkeit, die Ausdehnungscharakteristik in Abhängigkeit von der Temperatur entweder linear oder nicht linear zu wählen. Hierdurch kann z.B. die Stellgröße zum Verstellen des Schaltschwellenwertes mit zunehmender Temperatur geringer oder stärker wirkend ausgebildet sein.

Die temperaturempflindliche Einrichtung (14, 19, 20, 23) sind als Zwischenglieder zwischen der Feder (11) und der Schalteinrichtung (7, 8; 9, 10) ausgebildet und mit der Feder (11) in Reihe geschaltet. Es ist auch denkbar, daß die temperaturempfindlichen Einrichtungen (19, 20, 23) mit der Feder (11) in Reihe geschaltet, jedoch zwischen der Stellschraube (12) und der Feder (11) angeordnet sein können.

Die Wirkungsweise der Einrichtung ist wie folgt:

Unter vorgegebener Betriebsbedingung steht in der Druckkammer (4) der Solldruck an, der z.B: dem eines Fahrzeugreifens entspricht. Mit dem Solldruck ist der Kolben (6) gegen die Kraft der Feder (11) in eine Lage bewegt, in der das Einlaßventil (7, 8) geschlossen und das Auslaßventil (9, 10) geöffnet ist. Bei Absinken des Solldruckes am Einlaß (2), z.B. bei einem defekten Reifen, überwiegt die Kraft der Feder (11) bis schließlich ein Öffnen des Einlaßventils (7, 8) und ein Schließen des Auslaßventils (9, 10) erfolgt. Durch die Verbindung des Einlasses (2) mit dem Auslaß (3) über das Einlaßventil (7, 8), steht am Auslaß (3) ein Signaldruck an, der den Druckabfall unter den Solldruck signalisiert. Durch Wiederherstellen des Solldruckes nimmt die Ventileinrichtung (7, 8; 9, 10) die Ausgangsstellung ein, in der der Auslaß (3) mit der Atmosphäre verbunden ist.

Mit der temperaturempfindlichen Einrichtung (14, 19, 20, 23) wird bewirkt, daß trotz temperaturabhängiger Druckänderung, die auf die bewegliche Wand (5) wirkt, das Ventilglied (13) bezüglich seiner Stellung zur Ventileinrichtung (7, 8; 9, 10) sich nicht ändert. Die Ansprechcharakteristik der Schalteinrichtung bleibt daher trotz temperaturbedingter Abweichung vom Solldruck erhalten.

Die Schalteinrichtung kann auch elektrisch ausgeführt sein. Anstelle der Ventileinrichtung (7, 8; 9, 10) wäre dann z.B. ein elektrischer Schalter montiert. Die Betätigung des Schalters könnte mit einem entsprechend ausgebildeten Schaltstößel erfolgen, der anstelle des Ventilgliedes (13) wirksam wäre. Der Druckabfall unter den Solldruck wird dann durch ein elektrisches Signal angezeigt.

## Patentansprüche

1. Einrichtung zur Überwachung der Dichtigkeit eines Fahrzeugreifens, mit folgenden Merkmalen:
a) es ist eine Druckmeßeinrichtung zum Messen des im Fahrzeugreifen herrschenden Gasdruckes vorgesehen;
b) die Druckmeßeinrichtung steht mit einer Schalteinrichtung in Wirkverbindung, die zur Auswertung der Meßgröße der Druckmeßeinrichtung dient;
c) die Schalteinrichtung weist eine Schaltschwelle auf, die einem vorgegebenen Gasdruck entspricht,
d) es ist eine temperaturempfindliche Einrichtung vorgesehen;
e) die temperaturempfindliche Einrichtung ist aus einem in Abhängigkeit von der Temperatur seine Längenausdehnung verändernden Zwischenglied gebildet;
f) das Zwischenglied ist aus einem Dehnstoff-Arbeitselement (23) mit temperaturempfindlicher Längenausdehnung gebildet;
g) die Druckmeßeinrichtung ist aus einem mit einer Feder (11) belasteten Kolben (6) gebildet, der gegen die Kraft der Feder (11) mit dem Gasdruck beaufschlagbar ist;
h) die temperaturempfindliche Einrichtung dient zur temperaturabhängigen Veränderung der Schaltschwelle;
i) die temperaturempfindliche Einrichtung ist mit der Temperatur des im Fahrzeugreifen befindlichen Gases beaufschlagt;
j) die temperaturempfindliche Einrichtung ist in Reihe zu der die Federkraft erzeugenden Feder (11) angeordnet;
k) die temperaturabhängige Veränderung der Schaltschwelle erfolgt, indem die Längenausdehnung des Zwischenglieds die Federkraft der Feder (11) verändert;
l) die Längenausdehnung des Dehnstoff-Arbeitselementes erfolgt nicht linear.

## Claims

1. Device to monitor the airtightness of a vehicle tyre, having the following features:
a) a pressure measuring device is provided to measure the gas pressure prevailing in the vehicle tyre;
b) the pressure measuring device is operatively connected to a switching device which serves to evaluate the measured magnitude of the pressure measuring device;
c) the switching device has a switching threshold which corresponds to a predetermined gas pressure;
d) a temperature-sensitive device is provided;
e) the temperature-sensitive device is formed of an intermediate member changing its longitudinal extension in dependence on the temperature;
f) the intermediate member is formed of an expansion material working element (23) with temperature-sensitive longitudinal extension;
g) the pressure measuring device is formed of a piston (6) which is loaded by a spring (11) and which is arranged to be subjected to the gas pressure against the force of the spring (11);
h) the temperature-sensitive device serves for temperature-dependent alteration of the switching threshold;
i) the temperature-sensitive device is subjected to the temperature of the gas in the vehicle tyre;
j) the temperature-sensitive device is arranged in series with the spring (11) producing the spring force;
k) the temperature-dependent alteration in the switching threshold is effected by the fact that the longitudinal extension of the intermediate member alters the spring force of the spring (11);
l) the longitudinal extension of the expansion material working element is not linear.

## Revendications

1. Dispositif de contrôle de l'étanchéité d'un pneumatique de véhicule automobile, présentant les caractéristiques suivantes :
a) il est prévu un dispositif de mesure de pression pour mesurer la pression de gaz régnant dans le pneumatique;
b) le dispositif de mesure de pression est en liaison active avec un circuit qui sert à analyser la grandeur mesurée du dispositif de mesure;
c) le circuit présente un seuil de commutation qui correspond à une pression de gaz prédéterminée ;
d) il est prévu un dispositif sensible à la température ;
e) le dispositif sensible à la température est formé par un élément intermédiaire qui varie son extension longitudinale en fonction de la température ;
f) l'élément intermédiaire est formé par un élément actif à jauge de contrainte (23) dont l'extension longitudinale est sensible à la température ;
g) le dispositif de mesure de la pression est formé par un piston (6) chargé par un ressort (11), ledit piston étant susceptible d'être sollicité par la pression de gaz à l'encontre de la force du ressort (11);
h) le dispositif sensible à la température sert à la variation du seuil de commutation en fonction de la température ;
i) le dispositif sensible à la température est sollicité par la température du gaz se trouvant dans le pneumatique du véhicule ;
j) le dispositif sensible à la température est agencé en série avec le ressort (11) produisant la force élastique ;
k) la variation du seuil de commutation en fonction de la température se produit par le fait que l'extension longitudinale de l'élément intermédiaire modifie la force élastique du ressort (11) ;
l) l'extension longitudinale de l'élément actif à jauge de contrainte ne se produit pas de façon linéaire.
